# EUROPEAN PATENT SPECIFICATION

(11) **EP 3 456 222 B1**
(45) Date of publication and mention of the grant of the patent: **30.06.2021**
(21) Application number: 17191378.3
(22) Date of filing: 15.09.2017
(51) Int. Cl.: A47C 1/036, A47C 7/56, A47C 9/06, B60N 2/30, B64D 11/06, B61D 33/00

(54) **FOLDING SEAT FOR A PUBLIC TRANSPORT VEHICLE**
KLAPPSITZ FÜR EIN FAHRZEUG DES ÖFFENTLICHEN PERSONENVERKEHRS
SIÈGE RABATTABLE POUR VÉHICULE DE TRANSPORT PUBLIC

(43) Date of publication of application: 20.03.2019
(73) Proprietor: Bombardier Transportation GmbH, 10785 Berlin (DE)
(72) Inventor: Waroquier, Louis, 10439 Berlin (DE)
(74) Representative: Zimmermann & Partner Patentanwälte mbB

(56) References cited:
- FR-A1- 2 962 714
- US-A- 1 132 004
- US-A- 3 594 037
- US-A- 4 460 215

## Description

The present disclosure relates to a passenger seat for a public transport vehicle, such as a railcar of a railway vehicle. The passenger seat has a folded configuration and an open configuration for use by passengers.

Folding seats in public transport vehicles are known. Seats may fold so as to allow, as an alternative, utilization of the space inside the vehicle for purposes other than passenger seating.

DE 3 417 945 A1 describes an auxiliary seat assembly for use in vehicles. The seat cushion and seat back can be housed as folded in a pocket formed in the rear or lateral body panel of the cab. When folded up, the single-piece seat back is located in a pocket behind the folded-up bottom seat cushion, and does not provide any utility for potential passengers.

WO 2007 141054 A1 describes a controllable folding seat for a passenger compartment of a vehicle, the seat having a projection at the front edge of the main seat surface which can form a rest when the seat is folded. However, when used as a rest, such a projection can be mechanically stressed, particularly when the vehicle is in motion and the force of weight of a passenger on the projection is magnified by bouncing of the vehicle.

US 4 832 404 describes a flight attendant seat and its arrangement in an aircraft. The seat section is supported by a mounting and can be tilted. When the seat section is tilted, it occupies space in front of the seat back.

KR 2003 0046824 A describes an auxiliary seat for a bus. The seat portion of the seat is retractable by the operation of a switch, and is folded below the seat back by operation of a switch. Alternatively, the seat portion is folded upward and occupies the space in front of the seat back. In either case, the seat back is immobile.

US 3,594,037 A1 describes a cabin attendant seat. US 4,460,215 A1 describes a folding seat assembly.

GB 2 269 987 A describes a seat which is suitable for installation in a minibus with the backrest of the seat above a wheel arch. The folding seat of GB 2 269 987 A has an immobile backrest, and the seat bottom pivots to a retracted position in front of the backrest.

Passenger seats for public transport vehicles are not uniformly renown for providing comfort to passengers, or for being particularly flexible in providing configurations for multiple use. Furthermore, many are not optimized for the most efficient use of space. The folded configuration of a passenger seat may be such that the seat bottom occupies space in the vehicle which could otherwise provide space for luggage or passengers with mobility devices such as wheelchairs. Providing a comfortable seat and utilizing space efficiently, especially when the seat is folded, can be in difficult to achieve in the same seat design.

Furthermore, a folding seat has, in much of the prior art, no utility other than as a seat, and that only when the seat is unfolded; when the seat is folded up, it may occupy cabin space without providing any other utility. A folded up configuration of a prior art passenger seat may not be sturdy enough to provide support for standing passengers who may desire to lean on or support themselves with the folded up seat. Folding seats often leave the movable seat section exposed when folded up, so passengers may be tempted to try to rely on the exposed folded up seat section for support, only to find that the seat section gives way and fails to provide adequate support.

Another drawback of prior art folding seats is that they may obstruct a passageway, hindering the flow of passengers.

Train operators may prefer to use perch seats in order to increase the area available for standing and/or perching passengers, particularly in vehicles serving high volume passenger routes. Consequently, a vehicle may need to be temporarily removed from the fleet for a substantial amount of time at considerable expense to be refitted or refurbished to provide perch seats or sitting seats.

In view of the above considerations, it is desirable to have a folding seat that efficiently uses space. It is also desirable that the folding seat can provide for alternative use of the cabin space, particularly when the seat is in a folded configuration. It also is advantageous to provide a seat capable of performing multiple functions, such as providing robust support for passengers even when in a folded configuration, and/or maximizing vehicle space for standing passengers, perching passengers, and/or their luggage.

Disclosed herein is a passenger seat according to claim 1 which is directed at solving the aforementioned problems. Also disclosed is a railcar for a railway vehicle according to claim 13, which includes at least one passenger seat according to claim 1. Further aspects, advantages, and features of the present invention are apparent from the dependent claims, the description, and the accompanying drawings. The reconfigurability of the passenger seats disclosed herein may avoid time consuming, costly, and/or complicated refurbishment of a vehicle to change from a sitting seat to a perch seat or *vice versa* and may offer maximum vehicle layout flexibility, e.g. during peak or off peak hours of operation.

The passenger seat may include a movable seat base, and a seat back having an upper back part and a lower back part. The lower back part extends towards the seat base and is arranged at least partially below the upper back part. The lower back part is movable relative to the upper back part between a storing position and an open position. The passenger seat has a folded configuration for storing the seat with the seat base in a substantially upright position and an open configuration with the seat base in a substantially horizontal position to be used by a passenger. The upper back part and the lower back part form together the seat back in the open configuration. The lower back part is movable into the storing position to provide space for the seat base when the passenger seat is brought into the folded configuration. Thus, the passenger seat can make efficient use of space.

In the folded configuration, only the upper part is visible while the lower part is obstructed by the seat base.

It is further contemplated that the upper back part and the seat base each can include an interior wall side for forming a visible part of an interior wall of the public transport vehicle in the folded configuration of the passenger seat. It is yet further contemplated that, in the folded configuration of the passenger seat, the interior wall side of the upper back part can be flush with the interior wall side of the seat base. A folded configuration in which the interior wall side of the seat base is flush with the same side of the upper back part can provide greater cabin space, for luggage, for example. The seat is therefor at least partially integrated into the wall and makes efficient use of the available space provided by the wall.

In an embodiment that can be combined with any other embodiment described herein, it is possible that the upper back part of the seat back can function as a perch seat, particularly when the seat is in the folded configuration. The upper back part of the seat back can provide a surface upon which a passenger of approximately average height may perch.

In an embodiment that can be combined with any other embodiment described herein, the upper back part can be attached to an interior wall of the public transport vehicle. Such an arrangement can provide for a robust attachment of the upper back part to the vehicle, so that the upper back part can fully support the weight of passengers, particularly when used as a perch seat.

In an embodiment that can be combined with any other embodiment described herein, the passenger seat includes a connecting element that connects a back end of the seat base with a lower end of the lower back part. The connecting element can movably connect the back end of the seat base with the lower end of the lower back part. Such a mechanism can allow the lower back part to move relative to the upper back part, thus aiding in enabling the seat to be reconfigured between the storing and open positions.

For example, the lower back part can be rotatably mounted at its upper end. The upper end can be arranged next to the upper back part so that the lower back part is configured to be pivoted, or swung, into the storing position when the seat base is moved into the substantially upright position, such that the passenger seat is moved into the folded configuration. Consequently, the passenger seat can make efficient use of space, the design opening up more cabin space when the passenger seat is in the folded configuration.

The connecting element optionally includes a long-slot bar with a slot and a peg slidable within the slot. The long-slot bar can be hinged to the lower back part, and the peg can be attached to the seat base. The peg can slide in the slot of the long-slot bar when the seat base is moved relative to the lower back part. The connecting element can couple motion of the seat base with motion of the lower back part, particularly the pivoting of the lower back part.

In another example, the connecting element includes a guide rail and a slider which is slidably mounted to the guide rail; the seat base can be hinged to the slider. Optionally, the lower back part can be fixed to the slider so that the lower back part and the seat base can be moved together along the guide rail. Thus, the passenger seat can be moved between the open and folded configurations. A further option is that the connecting element also includes a locking element that prevents movement of the slider when the seat base is in the open position. A locking element can ensure that the passenger seat is kept in an open position when its function as a seat is desired.

In an embodiment that can be combined with any other embodiment described herein, the passenger seat includes a drive for moving the seat base into the substantially upright position. A drive may discourage unauthorized users from reconfiguring the passenger seat.

Also disclosed herein is railcar for a railway vehicle, having a railcar body and at least one passenger seat attached to the railcar body. In an embodiment that can be combined with any other embodiment described herein, the guide rail of the connecting element is fixed to the railcar body. In yet another embodiment that can be combined with any other embodiment described herein, the railcar also includes an interior wall covering the railcar body; and a pocket space formed in the interior wall; and in the folded configuration, the seat base and the lower back part of the seat back are within the pocket space. Such a design allows for quite efficient use of space, increasing the room in the cab when the seat is in the folded configuration.
Fig. 1 depicts a passenger seat for a public transport vehicle in an open configuration, according to an embodiment described herein.
Fig. 2 depicts a passenger seat in the folded configuration, according to an embodiment described herein.
Fig. 3 depicts schematically the operation of a passenger seat, according to an embodiment described herein.
Fig. 4 depicts a passenger seat which includes a drive, according to an embodiment described herein.
Fig. 5 depicts a passenger seat for a public transport vehicle in an open configuration, according to an embodiment described herein.
Fig. 6 depicts a passenger seat transitioning from an open configuration to a folded configuration, according to an embodiment described herein.
Fig. 7 depicts a passenger seat in the folded configuration, according to an embodiment described herein.
Fig. 8 depicts a passenger seat for a public transport vehicle in an open configuration, according to an embodiment described herein.
Fig. 9 depicts a passenger seat in the folded configuration, according to an embodiment described herein.
Herein, "public transport vehicle" should be interpreted to include both public and private vehicles which transport groups of people, and should not be restricted to vehicles licensed or contracted by municipalities or government entities for operation in public.
Unless indicated otherwise, the directions used herein, such as "forward" and "upper," are defined as they would be in relation to the coordinates of a passenger seated in the passenger seat. The "forward" direction is a horizontal direction extending in the same direction as the direction a seated passenger faces when seated in the passenger seat. "Behind" or "backward" is the horizontal direction opposite to the "forward" direction. "Upward" is a vertical direction extending from beneath a seated passenger toward the ceiling of the vehicle. "Downward" is vertically directed in the opposite direction as "upward." "Lower" is used herein with a meaning analogous to "downward;" for example, herein, the "lower back part" is located generally downward from the "upper back part."

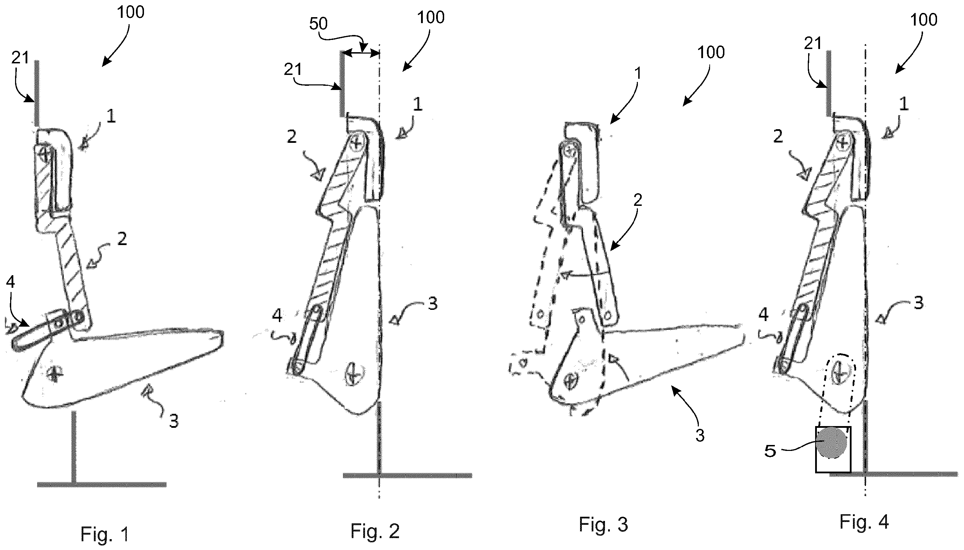

Fig. 1 shows a passenger seat 100 for a public transport vehicle in an open configuration, according to an embodiment described herein. The passenger seat 100 includes a movable seat base 3 and a seat back that has an upper back part 1 and a lower back part 2. The upper and lower back parts 1 and 2 can be discrete pieces. The upper back part 1 may be immobile, such as fixed to the inner wall 21 of the transport vehicle. The lower back part 2 can extend toward the seat base 3. As depicted in Fig. 1, the lower back part 2 is arranged at least partially below the upper back part 1, and can be also at least partly behind the upper back part 1. The upper back part 1 can be attached to an interior wall 21 of the public transport vehicle.

The lower back part 2 can be movable relative to the upper back part 1. The movement of the lower back part 2 can be between a storing position (see Fig. 2) and an open position (see Fig. 1). In the open position the front face of the lower back part 2 can be exposed, and provide a surface for supporting a seated passenger's back. The storing position of the lower back part 2 can coincide with the folded configuration of the passenger seat 100; and the open position can coincide with the open configuration of the passenger seat 100. The folded configuration can be for storing the seat, with the seat base 3 in a substantially upright position. The open configuration can be with the seat base 3 in a substantially horizontal position to be used by a passenger, such as supporting the weight of a seated passenger. In the open configuration, the upper and lower back parts 1 and 2 form, together, the seat back. When the seat 100 is in the open configuration as depicted in Fig. 1, the upper back part 1 can function as back rest; alternatively or additionally, the upper back part 1 can function as a head rest.

The upper back part 1 can function as a perch seat when the seat 100 is in the closed configuration, the closed configuration being depicted in Fig. 2. The forward face of the upper back part 1, and/or the top surface (upper surface) of the upper back part 1, may function as a perch seat, particularly when the passenger seat 100 is in the folded configuration.

Fig. 2 depicts a passenger seat in the folded configuration, according to an embodiment described herein. The upper surface of the upper back part 1 of the seat back can provide a surface upon which a passenger of approximately average height may perch. For example, the upper surface of the upper back part 1 of the seat back can support the weight of a passenger in a "half-standing/half-sitting" posture, a perching posture, or a leaning posture with the hips and/or buttocks supported by the upper back part 1 of the seat back, the legs being straight or slightly bent at the knees such as at an angle of at least about 130°.

Alternatively, the front face of the upper back part 1 may be flush with the interior wall 21 of the vehicle, a design which may increase cabin space. Alternatively/additionally, the front face of the upper back part 1 may be flush with the portion of the interior wall 21 directly above the upper back part 1. Regardless of the position of the front face of the upper back part 1 with respect to the inside wall 21 of the vehicle, in the open configuration (see Fig. 1), the upper back part 1 can form a headrest and/or backrest.

As depicted in Fig. 2, when the passenger seat is in the folded configuration, the upper back part 1 and the seat base 3 each can form part of the interior wall 21 of the vehicle. For example, when the passenger seat 100 is in the folded configuration, each of the upper back part 1 and the seat base 3 includes an interior wall side. In an embodiment, in the folded configuration of the passenger seat 100, the interior wall side of the upper back part 1 is flush with the interior wall side of the seat base 3. The upper back part 1 may protrude a predetermined distance 50 from the interior wall 21 of the vehicle, as depicted in Fig. 2, such as to form an ergonomic perch.

Figs. 1 and 2 each show a connecting element 4 which can connect the back end of the seat base 3 with a lower end of the lower back part 2. The connecting element 4 can be a long-slot bar with a slot and a peg that is slidable within the slot. The long-slot bar can be hinged to the lower back part 2. The peg can be attached to the seat base 3, such as the back of the seat base 3. The peg can slide in the slot of the long-slot bar when the seat base 3 is moved relative to the lower back part 2 to move the passenger seat between the open and folded configurations.

The peg can be located at the back end of the seat base 3, such as an upper side of the back end of the seat base 3. The peg can be positioned directly behind the lower back part 2 when in the open configuration (Fig. 1). The peg can be positioned mainly below the lower back part 2 in the folded configuration (Fig. 2). The peg can be on a flange of the seat base 3 which may abut the lower rear of the lower back part 2 when the seat is in the open configuration, the flange protruding upwardly from the rear part of the seat base 3 when in the open configuration.

The peg and long-slot bar can operate so as to allow the lower back part 2 to pivot around a point near the top of the lower back part 2. The bottom of the lower back part can be moved backwards, such as into a pocket space formed in the interior wall of the vehicle. In the folded configuration, the seat base 3 and the lower back part 2 of the seat back can be within the pocket space.

Fig. 3 depicts schematically the operation of a passenger seat, according to an embodiment described herein. Fig. 3, for ease of understanding, does not show the optional connecting element 4 which is shown in Figs. 1 and 2. As depicted in Fig. 3, the seat base 3 is in a substantially horizontal position when the passenger seat is in the open configuration, and is movable to a substantially vertical position when the passenger seat 100 is in the folded configuration. As seen also in Fig. 2, the seat base 3 may pivot around a point near the rear of the seat base. Thus, the front edge of the seat base 3 in the open configuration moves to the top of the seat base 3 when in the folded configuration. In the folded configuration, the front edge of the seat base may be directly opposite the bottom of the upper back part 1. The underside of the seat base 3, when the passenger seat is in the open configuration, can face the inside of the vehicle, and/or be "forward-facing," when the passenger seat is in the folded configuration. The underside of the seat base 3 and the front surface of the upper back part 1 can form the forward-facing surface of the passenger seat, when the passenger seat is in the folded configuration. The seat base 3 can be raised to form a uniform and smooth forward-facing surface, or uniform and 'smooth' sidewall. Furthermore, optionally, the forward-facing surface of the passenger seat in the folded configuration can be flush with the interior wall of the vehicle; alternatively, the forward-facing surface of the passenger seat in the folded configuration can project forward from the interior wall, so as to form a perch, such as a perch suitable for perch sitting of a passenger.

The lower back part 2 can be rotatably mounted at an upper end, such as the upper end that is below the upper back part 1 (see Fig. 3, for example). The upper back part 1 can be pivoted into the storing position when the seat base 3 is moved into the substantially upright position, such that the passenger seat is in the folded configuration.

The top surface of the seat base 3, when the seat base 3 is in the substantially horizontal position, can be configured to come into contact with the underside of a seated passenger (see Fig. 1). The bottom surface of the seat base 3, when the seat base 3 is in the substantially horizontal position, moves so as to become the forward-facing surface, when the passenger seat 100 is moved into the folded configuration (see Fig. 2).

In the open configuration, the front face of the lower back part 2 can project about 90° from the top surface of the seat base 3. In the folded configuration, the forward face of the lower back part 2 can be directly opposite the top surface, or seating surface, of the seat base 3.

As depicted in Fig. 4, the passenger seat 100 can include a drive 5 which can move the seat base 3 into the substantially upright position. Optionally, the drive 5 can also move the seat base 3 into the substantially horizontal position. The drive 5 can be mounted on the floor of the vehicle, for example. The drive 5 can be operatively coupled to the seat base 3, such as the rear of the seat base 3, and/or an axle of the seat base 3. The drive 5 can be coupled to the seat base 3 through a belt or chain, for example. Operation of the drive 5 can cause the seat base 3 to pivot, such as about the axle, from the substantially horizontal position to the substantially vertical position, and optionally *vice versa.* The motion of the seat base 3 can cause motion of the lower seat back 2, through the connecting element 4. The connecting element 4 can connect the back end of the seat base 3 with a lower end of the lower back part 2.

In an embodiment, the upper back part 1 can optionally rotate and/or translate to provide a convenient surface to be used as a perch seat for standing passengers, perching passengers, leaning passengers, or the like, particularly in the folded configuration. The optional ability to translate and/or rotate the upper back part 1 can also be used to adjust the height and position of the perch seat. For example, the translation/rotation of the upper back part 1 can provide a surface at an adjustable height to ensure an ergonomic sitting. The upper back part 1 can be provided at a predetermined position, such as a predetermined height, to provide an ergonomic perch for a person of average height.

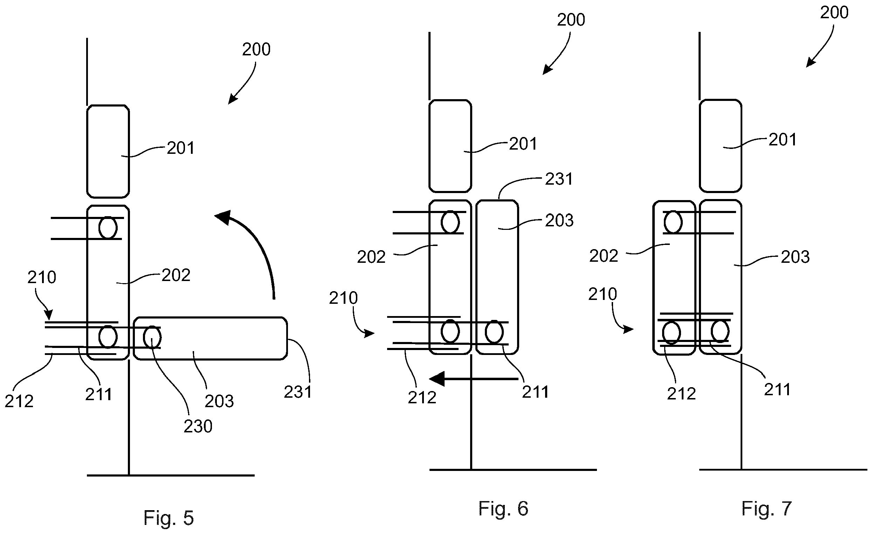

Figs. 5, 6, and 7 show an embodiment of a passenger seat 200 in the open configuration, an intermediate configuration, and a folded position, respectively. The embodiment of Figs. 5, 6, and 7 includes a connecting element having a guide rail 212 and a slider 211 which is slidably mounted to the guide rail 212. The seat base 203 can be hinged to the slider 211. The seat base 203 may rotate about an axle 230 that connects to the slider 211. The lower back part 202 can be fixed to the slider 211, so that the lower back part 202 and the seat base 203 can be moved together along the guide rail 212. A further option is that the connecting element 210 also includes a locking element that prevents movement of the slider 211 when the seat base 203 is in the open position. The locking element can ensure that the passenger seat 200 is kept in an open position when its function as a seat is desired.

The intermediate configuration of Fig. 6 may also provide a perch seat, such as the top surface 231 of the seat base 203, when the seat base 203 is in the substantially upright position. The top surface 231 of the seat base 203, when the seat base 203 is in the substantially upright position can be the front face 231 of the seat base when the seat base 203 is in the substantially horizontal position (see Fig. 5). There may be a locking element to maintain the seat in the intermediate configuration depicted in Fig. 6, the front face 231 of the seat base 203 in the folded up configuration providing a perch seat. Such a locking mechanism may fix the seat base 203 to the lower seat back 202. The locking mechanism for the seat base 203 and lower seat back 202 may function cooperatively with the locking element that prevents movement of the slider 211, so that when the seat base 203 is in the folded position, the movement of the slider 211 can be prevented, such as to provide a stable perch seat.

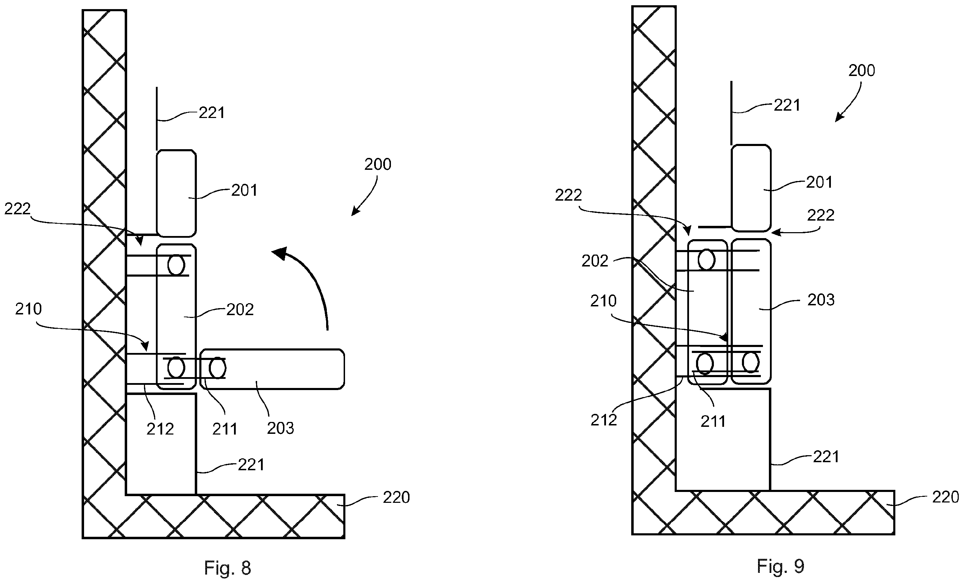

Figs. 8 and 9 depict an embodiment of a passenger seat 200 in the open and closed configurations, respectively. Figs. 8 and 9 also depict the railcar body 220. A railcar may include the railcar body 220 and one or more passenger seats 200, which are attached to the railcar body 220. The railcar body 220 can be covered by an interior wall 221. There can be a pocket space 222 formed in the interior wall 221. In the folded configuration (see Fig. 9), the seat base 203 and the lower back part 202 can be within the pocket space 222. Alternatively/additionally, the guide rail 212 of the connecting element 210 of the passenger seat can be fixed to the railcar body 220. It can be advantageous to utilize the pocket space 222 also for hardware, such as the connecting element 210, keeping the hardware shielded / hidden from passengers.

While there have been illustrated and described herein specific embodiments, it is within the scope of the present invention according to the attached claims to suitably modify the embodiments shown without departing from the scope of the appended claims.

### Reference numerals

- 1: upper back part
- 2: lower back part
- 3: movable seat base
- 4: connecting element
- 5: drive
- 20: railcar body
- 21: interior wall
- 22: pocket space
- 50: predetermined distance
- 100: passenger seat
- 200: passenger seat
- 201: upper back part
- 202: lower back part
- 203: movable seat base
- 210: connecting element
- 211: slider
- 212: guide rail
- 220: railcar body
- 221: interior wall
- 222: pocket space
- 230: axle
- 231: front face of seat base

## Claims

1. A passenger seat (100, 200) for a public transport vehicle, particularly for a railcar of a railway vehicle, comprising:
a movable seat base (3, 203);
a seat back comprising an upper back part (1, 201) and a lower back part (2, 202) which extends towards the seat base (3, 203) and which is arranged at least partially below the upper back part (1, 201), the lower back part (2, 202) is movable relative to the upper back part (1, 201) between a storing position and an open position; and
a connecting element (4, 210) movably connecting a back end of the seat base (3, 203) with a lower end of the lower back part (2, 202);
the passenger seat (100, 200) having a folded configuration for storing the seat with the seat base (3, 203) in a substantially upright position and an open configuration with the seat base (3, 203) in a substantially horizontal position to be used by a passenger, wherein the upper back part (1, 201) and the lower back part (2, 202) form together the seat back in the open configuration;
wherein the lower back part (2, 202) is movable into the storing position to provide space for the seat base (3, 203) when the passenger seat (100, 200) is brought into the folded configuration; and wherein
the connecting element (4) comprises a long-slot bar with a slot and a peg slidable within the slot, wherein the long-slot bar is hinged to the lower back part (2), and wherein the peg is attached to the seat base (3) and slides in the slot of the long-slot bar when the seat base (3) is moved relative to the lower back part (2) to move the passenger seat (100) between the open and folded configurations.

2. The passenger seat (100, 200) according to claim 1, wherein the upper back part (1, 201) and the seat base (3, 203) each comprises an interior wall side for forming a visible part of an interior wall of the public transport vehicle in the folded configuration of the passenger seat (100, 200).

3. A passenger seat (100, 200) according to claim 2, wherein the interior wall side of the upper back part (1, 201) is flush with the interior wall side of the seat base (3) in the folded configuration of the passenger seat (100, 200).

4. The passenger seat (100, 200) according to any of the preceding claims, wherein the upper back part (1, 201) forms a headrest and/or a perch seat.

5. The passenger seat (100, 200) according to any of the preceding claims, wherein the upper back part (1, 201) is adapted to be attached to an interior wall (21, 221) of the public transport vehicle.

6. The passenger seat (100, 200) according to any of the preceding claims, wherein the lower back part (2) is rotatably mounted at an upper end, the upper end arranged next to the upper back part (1) so that the lower back part (2) is configured to be pivoted into the storing position when the seat base (3) is moved into the substantially upright position, such that the passenger seat (100) is in the folded configuration.

7. The passenger seat (100) according to any of the previous claims, further comprising:
a drive (5) for moving the seat base (3) into the substantially upright position.

8. A railcar for a railway vehicle, comprising:
a railcar body (220); and
at least one passenger seat (100, 200) according to any of the previous claims attached to the railcar body (220).

9. The railcar according to claim 8, wherein the guide rail (212) of the connecting element (210) is fixed to the railcar body (220).

10. The railcar according to claim 8 or 9, further comprising:
an interior wall (21, 221) covering the railcar body (220); and
a pocket space (222) formed in the interior wall (221), wherein in the folded configuration, the seat base (3, 203) and the lower back part (2, 202) are within the pocket space (222).

## Patentansprüche

1. Fahrgastsitz (100, 200) für ein öffentliches Verkehrsmittel, insbesondere für einen Triebwagen eines Schienenfahrzeugs, aufweisend:
eine bewegliche Sitzgrundplatte (3, 203);
eine Sitzlehne, die ein oberes Rückenteil (1, 201) und ein unteres Rückenteil (2, 202) aufweist, das sich zur Sitzgrundplatte (3, 203) hin erstreckt und das zumindest teilweise unterhalb des oberen Rückenteils (1, 201) angeordnet ist, wobei das untere Rückenteil (2, 202) relativ zum oberen Rückenteil (1, 201) zwischen einer Aufbewahrungsposition und einer Öffnungsposition bewegbar ist; und
ein Verbindungselement (4, 210), das ein hinteres Ende der Sitzgrundplatte (3, 203) mit einem unteren Ende des unteren Rückenteils (2, 202) beweglich verbindet;
wobei der Fahrgastsitz (100, 200) eine gefalteten Konfiguration zum Aufbewahren des Sitzes mit der Sitzgrundplatte (3, 203) in einer im Wesentlichen aufrechten Position und eine offene Konfiguration mit der Sitzgrundplatte (3, 203) in einer im Wesentlichen horizontalen Position aufweist, um von einem Fahrgast benutzt zu werden, wobei das obere Rückenteil (1, 201) und das untere Rückenteil (2, 202) zusammen die Sitzlehne in der offenen Konfiguration bilden;
wobei das untere Rückenteil (2, 202) in die Aufbewahrungsposition bewegbar ist, um Platz für die Sitzgrundplatte (3, 203) bereitzustellen, wenn der Fahrgastsitz (100, 200) in die gefaltete Konfiguration gebracht wird; und wobei
das Verbindungselement (4) eine Langschlitzstange mit einem Schlitz und einem in dem Schlitz verschiebbaren Zapfen aufweist, wobei die Langschlitzstange an dem unteren Rückenteil (2) angelenkt ist, und wobei der Zapfen an der Sitzgrundplatte (3) angebracht ist und in dem Schlitz der Langschlitzstange gleitet, wenn die Sitzgrundplatte (3) relativ zu dem unteren Rückenteil (2) bewegt wird, um den Fahrgastsitz (100) zwischen der offenen und der gefalteten Konfiguration zu bewegen.

2. Fahrgastsitz (100, 200) nach Anspruch 1, wobei das obere Rückenteil (1, 201) und die Sitzgrundplatte (3, 203) jeweils eine Innenwandseite aufweisen, um einen sichtbaren Teil einer Innenwand des öffentlichen Verkehrsmittels in der gefalteten Konfiguration des Fahrgastsitzes (100, 200) zu bilden.

3. Fahrgastsitz (100, 200) nach Anspruch 2, wobei die Innenwandseite des oberen Rückenteils (1, 201) in der gefalteten Konfiguration des Fahrgastsitzes (100, 200) mit der Innenwandseite der Sitzgrundplatte (3) bündig ist.

4. Fahrgastsitz (100, 200) nach einem der vorhergehenden Ansprüche, wobei das obere Rückenteil (1, 201) eine Kopfstütze und/oder eine Sitzbank bildet.

5. Fahrgastsitz (100, 200) nach einem der vorangehenden Ansprüche, wobei das obere Rückenteil (1, 201) zur Befestigung an einer Innenwand (21, 221) des öffentlichen Verkehrsmittels angepasst ist.

6. Fahrgastsitz (100, 200) nach einem der vorhergehenden Ansprüche, wobei das untere Rückenteil (2) an einem oberen Ende drehbar gelagert ist, wobei das obere Ende nahe zum oberen Rückenteil (1) angeordnet ist, sodass das untere Rückenteil (2) derart konfiguriert ist, dass es in die Aufbewahrungsposition geschwenkt wird, wenn die Sitzgrundplatte (3) in die im Wesentlichen aufrechte Position bewegt wird, sodass der Fahrgastsitz (100) in der gefalteten Konfiguration ist.

7. Fahrgastsitz (100) nach einem der vorhergehenden Ansprüche, weiterhin aufweisend:
einen Antrieb (5) zum Bewegen der Sitzgrundplatte (3) in die im Wesentlichen aufrechte Position.

8. Triebwagen für ein Schienenfahrzeug, aufweisend:
einen Triebwagenkasten (220); und
mindestens einen Fahrgastsitz (100, 200) nach einem der vorhergehenden Ansprüche, der an dem Triebwagenkasten (220) befestigt ist.

9. Triebwagen nach Anspruch 8, wobei die Führungsschiene (212) des Verbindungselements (210) an dem Triebwagenkasten (220) befestigt ist.

10. Triebwagen nach Anspruch 8 oder 9, weiterhin aufweisend
eine Innenwand (21, 221), die den Triebwagenkasten (220) abdeckt; und
einen Stauraum (222), der in der Innenwand (221) ausgebildet ist, wobei sich in der gefalteten Konfiguration die Sitzgrundplatte (3, 203) und das untere Rückenteil (2, 202) innerhalb des Stauraums (222) befinden.

## Revendications

1. Siège de passager (100, 200) pour un véhicule de transport public, en particulier pour une voiture d'un véhicule ferroviaire, comprenant :
une base de siège mobile (3, 203) ;
un dossier de siège comprenant une partie supérieure de dossier (1, 201) et une partie inférieure de dossier (2, 202) qui s'étend vers la base de siège (3, 203) et qui est disposée au moins partiellement sous la partie supérieure de dossier (1, 201), la partie inférieure de dossier (2, 202) est mobile par rapport à la partie supérieure de dossier (1, 201) entre une position de rangement et une position ouverte ; et
un élément de connexion (4, 210) connectant de manière mobile une extrémité arrière de la base de siège (3, 203) avec une extrémité inférieure de la partie inférieure de dossier (2, 202) ;
le siège de passager (100, 200) ayant une configuration pliée pour ranger le siège avec la base de siège (3, 203) dans une position sensiblement verticale et une configuration ouverte avec la base de siège (3, 203) dans une position sensiblement horizontale pour être utilisée par un passager, dans lequel la partie supérieure de dossier (1, 201) et la partie inférieure de dossier (2, 202) forment ensemble le dossier du siège dans la configuration ouverte ;
dans lequel la partie inférieure de dossier (2, 202) est déplaçable dans la position de rangement pour fournir un espace pour la base de siège (3, 203) lorsque le siège de passager (100, 200) est amené dans la configuration pliée ; et dans lequel
l'élément de liaison (4) comprend une barre à longue fente avec une fente et une cheville pouvant coulisser dans la fente, dans lequel la barre à longue fente est articulée sur la partie inférieure de dossier (2), et dans lequel la cheville est fixée à la base de siège (3) et coulisse dans la fente de la barre à longue fente lorsque la base de siège (3) est déplacée par rapport à la partie inférieure de dossier (2) pour déplacer le siège de passager (100) entre les configurations ouverte et pliée.

2. Siège de passager (100, 200) selon la revendication 1, dans lequel la partie supérieure de dossier (1, 201) et la base de siège (3, 203) comprennent chacune un côté de paroi intérieure pour former une partie visible d'une paroi intérieure du véhicule de transport public dans la configuration pliée du siège de passager (100, 200).

3. Siège de passager (100, 200) selon la revendication 2, dans lequel le côté de la paroi intérieure de la partie supérieure de dossier (1, 201) est aligné avec le côté de la paroi intérieure de la base de siège (3) dans la configuration pliée du siège de passager (100, 200).

4. Siège de passager (100, 200) selon l'une quelconque des revendications précédentes, dans lequel la partie supérieure de dossier (1, 201) forme un appui-tête et/ou un siège perchoir.

5. Siège de passager (100, 200) selon l'une quelconque des revendications précédentes, dans lequel la partie supérieure de dossier (1, 201) est adaptée pour être fixée à une paroi intérieure (21, 221) du véhicule de transport en commun.

6. Siège de passager (100, 200) selon l'une quelconque des revendications précédentes, dans lequel la partie inférieure de dossier (2) est montée à rotation au niveau d'une extrémité supérieure, l'extrémité supérieure étant agencée à côté de la partie supérieure de dossier (1) de sorte que la partie inférieure de dossier {2) est configurée pour être pivotée en position de rangement lorsque la base de siège (3) est déplacée en position sensiblement verticale, de sorte que le siège de passager (100) est en configuration pliée.

7. Siège de passager (100) selon l'une quelconque des revendications précédentes, comprenant en outre : un entraînement (5) pour déplacer la base de siège (3) dans la position sensiblement verticale.

8. Voiture pour véhicule ferroviaire, comprenant :
une caisse de voiture (220) ; et
au moins un siège de passager (100, 200) selon l'une quelconque des revendications précédentes, fixé à la caisse de voiture (220).

9. Voiture selon la revendication 8, dans lequel le rail de guidage (212) de l'élément de liaison (210) est fixé à la caisse de voiture (220).

10. Voiture selon la revendication 8 ou 9, comprenant en outre :
une paroi intérieure (21, 221) recouvrant la caisse de voiture (220) ; et
un espace de poche (222) formé dans la paroi intérieure (221), dans lequel, dans la configuration pliée, la base de siège (3, 203) et la partie inférieure de dossier (2, 202) se trouvent dans l'espace de poche (222).
